# EUROPEAN PATENT APPLICATION

(11) **EP 3 282 536 A1**
(43) Date of publication of application: **14.02.2018**
(21) Application number: 17185631.3
(22) Date of filing: 09.08.2017
(51) Int. Cl.: H02H 9/04, H02H 9/06, H02H 9/00

(54) **TRANSIENT VOLTAGE PROTECTION CIRCUITS**

(30) Priority: 12.08.2016 US 201615235497
(71) Applicant: Hamilton Sundstrand Corporation, Charlotte, NC 28217-4578 (US)
(72) Inventor: O'DONNELL, Sean P., Rockford, IL Illinois 61125 (US); VANDERGRIFT, Adrian E., Rockford, IL Illinois 61125 (US); LEFAVOUR, David W., Machesney Park, IL Illinois 61115 (US); FOX, Brennan, Geneseo, IL Illinois 61254 (US); KHERALUWALA, Mustansir, Lake Zurich, IL Illinois 60047 (US)
(74) Representative: Bridge, Kerry Ann

(57) **Abstract**

A transient voltage protection circuit (100) includes an inductor with a source-side terminal and a device-side terminal, a first stage (102) with a protection element (108) connected to the inductor source-side terminal, and a second stage (104) with a protection element (118) connected to the inductor device-side terminal. A ground terminal is connected to the inductor device-side terminal through the first stage and to the inductor source-side terminal through the first stage. The second stage (104) defines a single conductive path between the inductor source-side terminal and the ground terminal.

## Description

### BACKGROUND OF THE INVENTION

### 1. Field of the Invention

The present disclosure relates to transient voltage protection circuits, and more particularly to transient voltage protection circuits for aircraft electrical systems.

### 2. Description of Related Art

Electrical systems, such as aircraft electrical systems, commonly include power generation systems, which generate power from turbine rotation, and wiring, which distributes the generated power to devices such as motors and onboard electronics. When an aircraft is struck by lightning at least a portion of the energy from the lightning strike can be transmitted through the electrical system wiring into electrical devices carried by the aircraft, e.g., motors and/or onboard electronics. The transmitted energy can potentially reducing the functionality of certain types of electronic devices, for example by tripping current flow control devices like breakers, or damaging electronic devices by applying excessive voltage stress to electronic devices. To the loss of functionality and/or damage to electronic devices from transients, some aircraft electrical systems employ lightening protection devices. The lightning protection devices typically prevent transient energy from reaching the onboard electronics, such as be dissipating the energy, thereby protecting onboard electronics from the lightning strike.

Such conventional methods and systems have generally been considered satisfactory for their intended purpose. However, there is still a need in the art for improved lightening protection circuits, aircraft electrical systems employing such lightning protection circuits, and methods of dissipating energy from lightning strikes. The present disclosure provides a solution for this need.

### SUMMARY OF THE INVENTION

A transient voltage protection circuit includes an inductor with a source-side terminal and a device-side terminal, a first stage with a protection element connected to the inductor source-side terminal, and a second stage with a protection element connected to the inductor device-side terminal. A ground terminal is connected to the inductor device-side terminal through the first stage and to the inductor source-side terminal through the first stage. The second stage defines a single conductive path between the inductor source-side terminal and the ground terminal.

In certain embodiments, the first stage can define a single conductive path between the inductor device-side terminal and the ground terminal. The first stage protection element can include a diode. The first stage can include a bus lead and a ground lead connected in series with one another through the diode. The diode can be a bidirectional transient voltage protection diode.

In accordance with certain embodiments, the second stage protection element can include a gas discharge tube. The second stage can include a bus lead and a ground lead connected in series with one another through the gas discharge tube. The gas discharge tube can have an inductor-side terminal and a ground-side terminal separated from one another by a spark gap. The spark gap can be a single spark gap. The inductor-side terminal of the gas discharge tube can connect directly to the inductor source-side terminal. The ground-side terminal of the gas discharge tube can connect directly to the ground terminal.

It is also contemplated that, in accordance with certain embodiments, a protected electrical device with a pin can be connected to the inductor device-side terminal. The first stage can be connected between the inductor device-side terminal and the pin of the protected electrical device. A power source lead can connect a power source to the inductor source-side terminal. The second stage of the transient voltage protection circuit can be connected between the inductor source-side terminal and the power source lead.

A lightening-protected electrical system includes a transient voltage protection circuit as described above. The first stage defines a single conductive path between the inductor device-side terminal and the ground terminal. The first stage protection element includes diode connected in series between a bus lead and a ground lead. The first stage bus lead connects to the inductor device-side terminal and the first stage ground lead connects to the ground terminal. The second stage protection element includes a gas discharge tube connected in series between a bus lead and a ground lead. The second stage bus lead connects to the inductor source-side terminal and the second stage ground lead connects to the ground terminal.

In certain embodiments, the system can include a protected electrical device with a pin. The pin can be connected to the inductor device-side terminal. The first stage bus lead can be connected between the inductor device-side terminal and the pin of the protected electrical device. A power source lead can connect a power source to the inductor source-side terminal. The second stage bus lead can be connected between the power source lead and the source-side terminal of the inductor.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a schematic view of an exemplary embodiment of an electrical system constructed in accordance with the present disclosure, showing a protected electrical load connected to a transient voltage protection circuit; and
Fig. 2 is a schematic view of the electrical system of Fig. 1, showing an inductor of the transient voltage protection circuit connected to a ground terminal by parallel first and second stages of the transient voltage protection circuit.

### DETAILED DESCRIPTION OF THE PREFERRED EMBODIMENTS

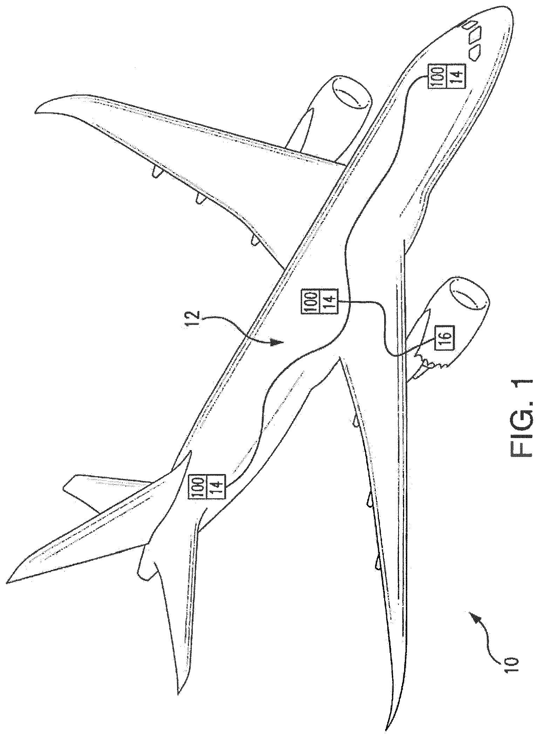

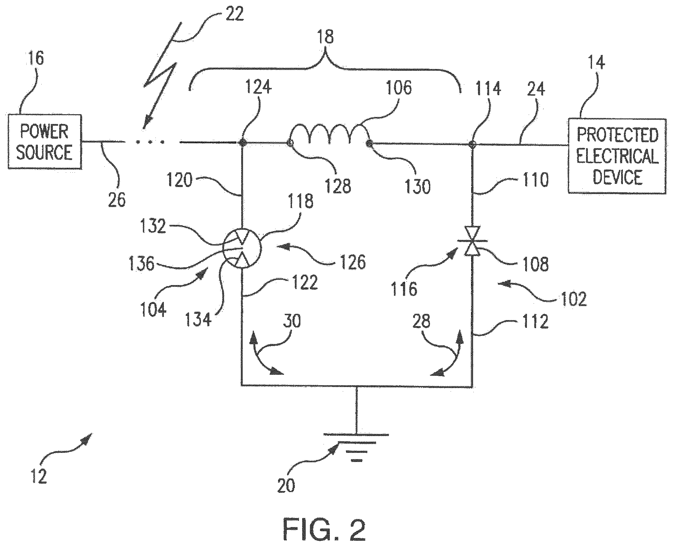

Reference will now be made to the drawings wherein like reference numerals identify similar structural features or aspects of the subject disclosure. For purposes of explanation and illustration, and not limitation, a partial view of an exemplary embodiment of a transient voltage protection circuit in accordance with the disclosure is shown in Fig. 1 and is designated generally by reference character 100. Other embodiments of transient voltage protection circuits and lightening protection systems employing such circuits in accordance with the disclosure, or aspects thereof, are provided in Fig. 2, as will be described. The systems and methods described herein can be used for protecting electronics on aircraft, though the present disclosure is not limited to aircraft electronics or to aircraft general.

Aircraft airframes have traditionally been partially constructed of aluminum, aluminum alloy, or other similar materials. This construction aids in lightning protection by distributing lightning energy through the body of the plane and by reducing magnetic field coupling to wires, thereby reducing the voltage level which would otherwise threaten the electronic devices onboard the plane. Recent innovations in airplane design however have led to increased use of composite materials owning to the strength and lightweight construction possible with composite materials. In part due to increased use of composite material construction, lightning strike requirements have changed to include require protection for higher transient voltages.

Referring to Fig. 1, an aircraft 10 is shown. Aircraft 10 includes a lightning-protected electrical system 12. Electrical system 12 interconnects one or more protected electrical devices 14 with a power source 16. Protection for the one or more electrical devices 14 is provided by transient voltage protection circuits 100 connected to respective electrical devices at low impedance interfaces of the one or more of the electrical devices 14.

With reference to Fig. 2, electrical system 12 is shown. As will be appreciated by those of skill in the art in view of the present disclosure, electrical system 12 can be subject to electrical transients. Electrical transients can result from electromagnetic interference from devices like motors and generators. Electrical transients can also result from lightening, schematically indicated with reference numeral 22. Since low impedance bus segment 18 will readily apply the transient voltage and transient current associated with lighting 22 to electrical device 14, transient voltage protection circuit 100 is arranged at the interface of bus segment 18 and electrical device 14 to protect electrical device 14 form the energy associated with lightening 22. In embodiments contemplated herein, it is contemplated that transient voltage protection circuit 100 provide protection to electrical device 14 for transients of, of about 3300 volts / 3300 amps or greater.

Transient voltage protection circuit 100 includes a first stage 102 and a second stage 104. First stage 102 and second stage 104 are connected electrically in parallel with one another between bus segment 18 of electrical system 12 and a ground terminal 20 of electrical system 12. An inductor 106 is connected along bus segment 18 between first stage 102 and second stage 104 to bias, e.g., increase, voltage applied to second stage 104 in relation to voltage applied to first stage 102 upon application of a transient to bus segment 18.

Inductor 106 includes a source-side terminal 128 and a device-side terminal 130. A pin 24 connects electrical device 14 to device-side terminal 130. First stage 102 is connected to between device-side terminal 130 and pin 24 of electrical device 14 at a terminal 114. Between terminal 114 and ground terminal 20, first stage 102 defines a single conductive path to ground terminal 20, i.e., with no parallel electrical path(s) extending between first stage 102 and ground terminal 20.

A source lead 26 connects a power source 16 to source-side terminal 128 of inductor 106. Second stage 104 is connected to between source-side terminal 128 and a source lead 26 of power source 16. Second stage 104 connects between source lead 26 and source-side terminal 128 at a terminal 124. Between terminal 124 and ground terminal 20 second stage 104 defines a single conductive path to ground terminal 20, i.e., with no parallel electrical path(s) extending from second stage 104 to ground terminal 20.

First stage 102 includes a first stage protection element 108. First stage protection element 108 is connected in series between a bus lead 110 and a ground lead 112 of first stage 102. Bus lead 110 connects first stage protection element 108 to bus segment 18 at a terminal 114. Ground lead 112 connects first stage protection element 108 with ground terminal 20. First stage protection element 108 includes a diode 116.

Diode 116 is a bidirectional transient voltage suppression (TVS) diode arranged to conduct current 30 between bus lead 110 and ground lead 112 upon application of a voltage potential above a breakdown voltage V_{D} of diode 116. It is contemplated that diode 116 may be a transorb-type device.

Second stage 104 includes a second stage protection element 118. Second stage protection element 118 is connected in series between a bus lead 120 and a ground lead 122. Bus lead 120 connects second stage protection element 118 to bus segment 18 at a terminal 124. Ground lead 122 connects second stage protection element 118 with ground terminal 20. Second stage protection element 118 includes a gas discharge tube 126.

Gas discharge tube 126 includes an inductor-side terminal 132 and a ground-side terminal 134. Inductor-side terminal 132 is separated from ground-side terminal 134 by a spark gap 136. In the illustrated exemplary embodiment spark gap 136 is a single spark gap, meaning that bus lead 120 defines an electrically continuous conductor extending between inductor-side terminal 132 and terminal 124 and ground lead 122 defines an electrically continuous conductor extending between ground-side terminal 134 and ground terminal 20. In this respect inductor-side terminal 132 of gas discharge tube 126 connects directly a source-side terminal 128 of inductor 106, and ground-side terminal 134 of gas discharge tube 126 connects directly to ground terminal 20. Upon application of a voltage potential greater than a predetermined sparkover voltage across inductor-side terminal 132 and ground-side terminal 134, gas discharge tube 126 conduct current 28 between bus lead 120 and ground lead 122

As will be appreciated by those of skill in the art in view of the present disclosure, diodes and gas discharge tubes generally begin conducting at different times upon application of a voltage above the breakdown voltage and spark over voltage of the respective element. In this respect the diode typically begins conducting prior to the gas discharge tube. This causes the diode to bear the full voltage stress of a voltage transient prior to the gas discharge tube sparking over and conducting. Below a certain transient threshold this typically is not of significant concern. However, high transients, e.g., at about 3300 volts / 3300 amps or higher, the energy absorbed by the diode during the delay interval can potentially damage the diode. Accordingly, diodes of relatively large size can be required to accommodate such transients.

Upon application of a transient voltage, inductor 106 increases voltage applied to gas discharge tube 126 in relation to that applied to diode 116. In this respect the voltage transient causes inductor 106 develop a magnetic field M which increase voltage applied at terminal 124 relative to that applied to 114. The increased voltage applied at terminal 124 causes gas discharge tube 126 to sparkover more quickly, reducing the delay interval between diode 116 beginning to conduct and gas discharge tube 126 beginning to conduct. The reduced delay interval reduces the peak voltage stress exerted on diode 116 by the transient event, enabling reduction of the size of diode 116 for a given transient protection rating or increasing the transient voltage protection of transient voltage protection circuit 100. Moreover, as gas discharge tube 126 is connected directly to ground terminal 20, gas discharge tube 126 presents a relatively low impedance path to ground for the transient, thereby reducing the peak voltage (or current flow) associated with the transient.

The methods and systems of the present disclosure, as described above and shown in the drawings, provide for transient voltage protection circuits with superior properties including tolerance for electrical transients greater that those typically required for aircraft certification, e.g., about 3300 volts / 3300 amps or greater. While the apparatus and methods of the subject disclosure have been shown and described with reference to preferred embodiments, those skilled in the art will readily appreciate that changes and/or modifications may be made thereto without departing from the scope of the subject disclosure.

## Claims

1. A transient voltage protection circuit (100), comprising;
an inductor with an source-side terminal and a device-side terminal;
a first stage (102) with a protection element (108) connected to the inductor device-side terminal;
a second stage (104) with a protection element (118) connected to the inductor source-side terminal; and
a ground terminal connected to the inductor source-side terminal through the second stage and to the inductor device-side terminal of the inductor through the first stage,
wherein the second stage (104) defines a single conductive path between the inductor source-side terminal and the ground terminal.

2. The circuit as recited in claim 1, wherein the first stage (102) defines a single conductive path between the inductor device-side terminal and the ground terminal (20).

3. The circuit as recited in claim 1 or 2, wherein the first stage protection element (118) comprises a diode (116) connected in series between a bus lead (120) and a ground lead (122).

4. The circuit as recited in claim 3, wherein the diode (116) is arranged to oppose current flow between the bus lead (120) and the ground lead (122).

5. The circuit as recited in claim 3, wherein the diode (116) is connected directly to the ground terminal (20).

6. The circuit as recited in any preceding claim, wherein the second stage protection element (118) comprises a gas discharge tube connected in series between a bus lead (120) and a ground lead (122).

7. The circuit as recited in claim 6, wherein the gas discharge tube (126) has an inductor-side terminal and a ground-side terminal separated from one another by a spark gap (136).

8. The circuit as recited in claim 7, wherein the spark gap is a single spark gap (136) arranged along the second stage (104) between the inductor source-side terminal and the ground terminal (20).

9. The circuit as recited in claim 7, wherein the inductor-side terminal of the gas discharge tube is connected directly to the source-side terminal of the inductor.

10. The circuit as recited in any preceding claim, further comprising a protected electrical device with a pin, wherein the pin is connected to the inductor device-side terminal, and preferably wherein the first stage (102) is connected between the inductor device-side terminal and a protected electrical device connected.

11. The circuit as recited in any preceding claim, further comprising a power source lead connected to the inductor source-side terminal.

12. The circuit as recited in claim 11, wherein the second stage (104) is connected between the inductor source-side terminal and the power source lead.

13. A lightening-protected electrical system, comprising:
a transient voltage protection circuit (100) as recited in claim 1;
wherein the first stage (102) defines a single conductive path between the inductor device-side terminal and the ground terminal;
wherein the first stage protection element (108) comprises a diode connected in series between a bus lead (120) and a ground lead (122), the first stage bus lead connecting to the inductor device-side terminal, the first stage ground lead connecting to the ground terminal; and
wherein the second stage protection element (118) comprises a gas discharge tube connected in series between a bus lead (120) and a ground lead (122), the second stage bus lead connecting to the inductor source-side terminal, the second stage ground lead connecting to the ground terminal.

14. The system as recited in claim 13, further comprising a protected electrical device with an pin (24), wherein the pin (24) is connected to the inductor device-side terminal, wherein the first stage bus lead is connected between the inductor device-side terminal and the pin (24) of the protected electrical device.

15. The system as recited in claim 13 or 14, further comprising a power source with a power source lead, wherein the power source lead is connected to the inductor source-side terminal, wherein the second stage bus lead is connected between the inductor source-side terminal and the power source lead of the power source.
